# EUROPEAN PATENT APPLICATION

(11) **EP 4 083 356 A1**
(43) Date of publication of application: **02.11.2022**
(21) Application number: 19957370.0
(22) Date of filing: 24.12.2019
(51) Int. Cl.: E05B 49/00, G07C 9/00, H04N 5/225, G06T 1/00

(54) **GATE DEVICE, METHOD FOR CONTROLLING SAME, AND PROGRAM**

(71) Applicant: NEC Corporation, Tokyo 108-8001 (JP)
(72) Inventor: OTANI, Takumi, Tokyo 108-8001 (JP); INOUE, Junichi, Tokyo 108-8001 (JP); TAKAHASHI, Sho, Kawasaki-shi, Kanagawa 213-8511 (JP)
(74) Representative: Betten & Resch
(86) International application number: PCT/JP2019/050712
(87) International publication number: WO 2021/130871

(57) **Abstract**

A gate apparatus (100) is provided on a side of a passage (12), and includes an image capturing unit (102) that captures an image of a person who enters the passage (12) with an image capturing direction oblique with respect to a traveling direction in which a person passes through the passage (12), a half mirror (40) provided in front of the image capturing unit (102) in the image capturing direction of the image capturing unit (102), and a transmission unit (104) that transmits the image captured by the image capturing unit (102) to a face authentication apparatus 50.

## Description

### TECHNICAL FIELD

The present invention relates to a gate apparatus, a control method of the same, and a program.

### BACKGROUND ART

With progress of image recognition technology, in recent years, an authentication apparatus using a face image of a person has been put into practical use when entering/leaving a facility or the like requiring security management. Various technologies for improving recognition accuracy of the image have been proposed.

Patent Document 1 describes a gate apparatus that allows only permitted persons to pass through an airport, an event hall, or the like. The gate apparatus described in Patent Document 1 has a face authentication apparatus. The face authentication apparatus includes a camera that captures a face image of an authentication target person standing at a position facing the apparatus, a display that displays character information or the like for explaining a procedure related to face authentication to the target person, a half mirror to be disposed at a position covering the camera and the display, and a passport reader that scans a passport of the target person. The gate apparatus has a pole-like structure. The structure extends upward from an upper surface of a housing (gate body) that is installed along a path through which the target person passes. In addition, a plurality of light emitting diodes (LEDs) are arranged side by side in a vertical direction as a display apparatus on a side surface of the structure, and indicate a progress of authentication processing in the gate apparatus by the number, order, color, and the like of the LEDs turned on.

A face authentication apparatus described in Patent Document 2 includes a half mirror having a mirror surface on a front surface side facing a person to be authenticated, and a plurality of cameras disposed vertically on a back surface side of the half mirror, and performs authentication processing by using images captured by the cameras. Patent Document 2 describes that, when this face authentication apparatus is used, a person to be authenticated visually recognizes the half mirror in a natural pose without being aware of the camera on the other side of the half mirror.

### RELATED DOCUMENT

### PATENT DOCUMENT

[Patent Document 1] Japanese Patent Application Publication No. 2019-71126
[Patent Document 2] Japanese Patent Application Publication No. 2007-79791

### SUMMARY OF INVENTION

### TECHNICAL PROBLEM

In order to improve accuracy of authentication (e.g., face authentication) of a target person, it is preferable that a face of the target person of which image is captured faces the front with respect to the camera as much as possible. On the other hand, when a person passes through a passage, the person often faces a traveling direction. For this reason, when authentication of a target person passing through a gate apparatus is performed, it is difficult to capture an image of the target person in a state of facing the front.

The present invention has been made in view of the above-mentioned circumstances, and an object thereof is to increase a possibility that a target person directly faces an image capturing unit when photographing for authentication is performed by a gate apparatus.

### SOLUTION TO PROBLEM

In order to solve the problem described above, aspects of the present invention each employ the following configurations.

A first aspect relates to a gate apparatus.

The gate apparatus according to the first aspect includes:
an image capturing unit that is provided on a side of a passage, and captures an image of a person entering the passage with an image capturing direction oblique with respect to a traveling direction in which a person passes through the passage;
a half mirror that is provided in front of the image capturing unit in the image capturing direction of the image capturing unit; and
a transmission unit that transmits the image captured by the image capturing unit to an authentication apparatus.

A second aspect relates to a control method of a gate apparatus being executed by at least one computer.

The control method of a gate apparatus according to the second aspect is a control method of a gate apparatus including: an image capturing unit that is provided on a side of a passage, and captures an image of a person entering the passage with an image capturing direction oblique with respect to a traveling direction in which a person passes through the passage; and
a half mirror that is provided in front of the image capturing unit in the image capturing direction of the image capturing unit, the control method including: by the gate apparatus,
causing the image capturing unit to capture an image of a person passing through the passage; and
transmitting the image captured by the image capturing unit to an authentication apparatus.

Note that, as another aspect of the present invention, a program causing at least one computer to execute the above-mentioned method of the second aspect may be used, or a computer-readable storage medium on which such a program is recorded may be used. The storage medium includes a non-transitory tangible medium.

The computer program includes a computer program code that, when being executed by a computer, causes the computer to perform the control method on a gate apparatus.

Note that any combination of the above-mentioned components and a conversion of the expression of the present invention among a method, an apparatus, a system, a storage medium, a computer program, and the like are also effective as aspects of the present invention.

In addition, the various components of the present invention do not necessarily need to be individual separate entities, and a plurality of components may be formed as a single member, a single component may be formed of a plurality of members, one component may be a part of another component, a part of one component may overlap a part of another component, and the like.

Although the method and the computer program according to the present invention describe a plurality of procedures in order, the order of the description does not limit an order in which the plurality of procedures are executed. Therefore, when the method and the computer program according to the present invention are implemented, the order of the plurality of procedures can be changed within a range that does not hinder the content.

Moreover, the plurality of procedures of the method and the computer program according to the present invention are not limited to being executed individually at different timings. Therefore, another procedure may occur during execution of a certain procedure, an execution timing of a certain procedure and an execution timing of another procedure may partially or entirely be overlapped, or the like.

### ADVANTAGEOUS EFFECTS OF INVENTION

According to each of the above-mentioned aspects, when the gate apparatus performs photographing for authentication, a possibility that a target person directly faces the image capturing unit is able to be increased.

The above-described and other objects, features, and advantages will become more apparent from the following description of the preferred example embodiments, and the following drawings accompanying the example embodiments.

### BRIEF DESCRIPTION OF THE DRAWINGS

Fig. 1 is a diagram illustrating a functional configuration example of a gate system according to an example embodiment.
Fig. 2 is a diagram schematically illustrating an outline of the gate system according to the example embodiment.
Fig. 3 is a plan view of a gate apparatus according to the present example embodiment as viewed from above.
Fig. 4 is a block diagram illustrating a hardware configuration of a computer that implements the gate apparatus illustrated in Fig. 1.
Fig. 5 is a flowchart illustrating an operation example of the gate apparatus according to the present example embodiment.
Fig. 6 is a front view of an inside of a camera unit with a half mirror removed.
Fig. 7 is a functional block diagram illustrating a functional configuration example of a gate apparatus according to the present example embodiment.
Fig. 8 is a flowchart illustrating an operation example of the gate system according to the present example embodiment.
Fig. 9 is a functional block diagram illustrating a logical configuration example of a gate apparatus according to the present example embodiment.
Fig. 10 is a diagram illustrating a side view of the gate apparatus according to the present example embodiment as viewed from a passage side.
Fig. 11 is a flowchart illustrating an operation example of a gate system according to the present example embodiment.
Fig. 12 is a functional block diagram illustrating a logical configuration example of a gate apparatus according to the present example embodiment.
Fig. 13 is a front view of an inside of a camera unit with the half mirror removed.
Fig. 14 is a front view of a camera unit to which a half mirror is attached.

### DESCRIPTION OF EMBODIMENTS

Example embodiments according to the present invention will be described below by using the drawings. In all the drawings, the same components are denoted by the same reference numerals, and description thereof is omitted as appropriate.

In an example embodiment, "acquisition" includes at least one of the following: the self-apparatus acquires data or information stored in another apparatus or a storage medium (active acquisition), and the self-apparatus inputs data or information being output from another apparatus (passive acquisition). Examples of active acquisition include requesting or querying to other apparatuses and receiving a reply thereto, accessing and reading other apparatuses or storage media, and the like. Examples of passive acquisition include receiving information delivered (or sent, pushed, and the like.). Further, the "acquisition" may be to select and acquire data from among received data or information, or to select and receive distributed data or information.

### (First Example Embodiment)

### <System overview>

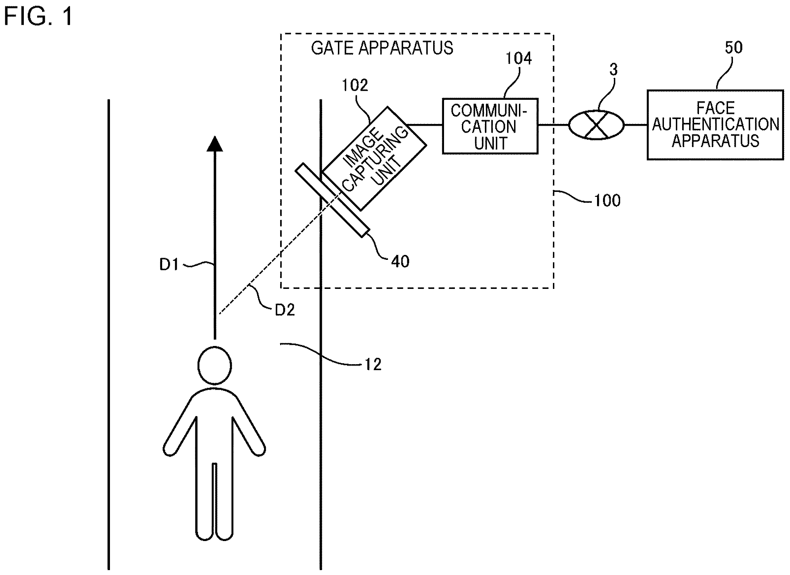

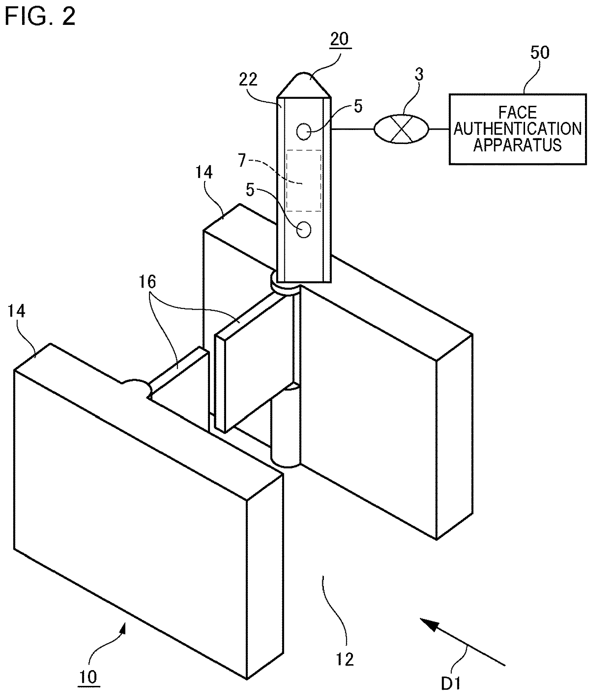

Fig. 1 is a diagram illustrating a functional configuration example of a gate system 1 according to an example embodiment. Fig. 2 is a diagram schematically illustrating an outline of the gate system 1 according to the example embodiment.

The gate system 1 includes a gate apparatus 100 and a face authentication apparatus 50. The gate apparatus 100 includes a housing 14 and a camera unit 20. The gate apparatus 100 functionally includes an image capturing unit 102 and a transmission unit 104.

The face authentication apparatus 50 is connected to the gate apparatus 100 via a communication network 3. The face authentication apparatus 50 collates a feature value of a face image of a person registered in advance with a feature value extracted from a face image acquired by the gate apparatus 100 and thereby performs authentication processing of the person.

When collating the feature value of the face image of the person in the captured image with the feature value of the face image of the person registered in advance, the face authentication apparatus 50 may acquire discrimination information for identifying the person in the captured image from the gate apparatus 100 and collate the feature value with the registered feature value of the person in the discrimination information. The gate apparatus 100 may read discrimination information for identifying a person from, for example, a boarding pass, a passport, or the like by using a reading apparatus (not illustrated), and the transmission unit 104 may transmit the discrimination information to the face authentication apparatus 50 in association with an image captured by the image capturing unit 102. By doing so, the time required for the authentication processing can be shortened, and processing load of the face authentication apparatus 50 can also be reduced.

In the present example embodiment, authentication processing is performed by the face authentication apparatus 50 using a face image of a person, but authentication processing may be performed by an authentication apparatus using other biometric authentication information. The biometric authentication information includes, for example, at least one feature value such as an iris, a vein, an auricle, a fingerprint, a gait, a backbone (height, shoulder width, body length, skeleton, and the like). The authentication apparatus extracts the feature value of the biometric authentication information from the image captured by the image capturing unit 102, and performs authentication processing.

The face authentication apparatus 50 may perform the authentication processing again by using a plurality of images or a plurality of frames transmitted by the transmission unit 104 until the accuracy of the authentication result becomes equal to or higher than a threshold value. However, since an image captured when a person passes through the passage 12 is used for the authentication processing, it is preferable to set a limit on the number of times or a time of re-execution of the authentication processing.

The gate apparatus 100 of the gate system 1 according to the present example embodiment is installed, for example, at an entrance of an airport, in front of a security inspection station, or the like. It may be installed at the entrance to and exit from a space where entering and exiting persons are managed. Alternatively, in a store or the like, it may be installed in combination with the settlement terminal as a gate of a settlement terminal for cashless settlement. Alternatively, it may be installed as a gate of an entrance/exit of an unattended store without a store clerk arranged.

### <Function Configuration Example>

As illustrated in Fig. 1, the gate apparatus 100 includes the image capturing unit 102, a half mirror 40, and the transmission unit 104. The image capturing unit 102 is provided on a side of a passage 12, and captures an image of a person who enters the passage 12 with an image capturing direction D2 oblique with respect to a traveling direction D1 in which the person passes through the passage 12. The half mirror 40 is provided in front of the image capturing unit 102 in an image capturing direction D2 of the image capturing unit 102. The transmission unit 104 transmits the image captured by the image capturing unit 102 to the authentication apparatus (face authentication apparatus 50 in the present example embodiment).

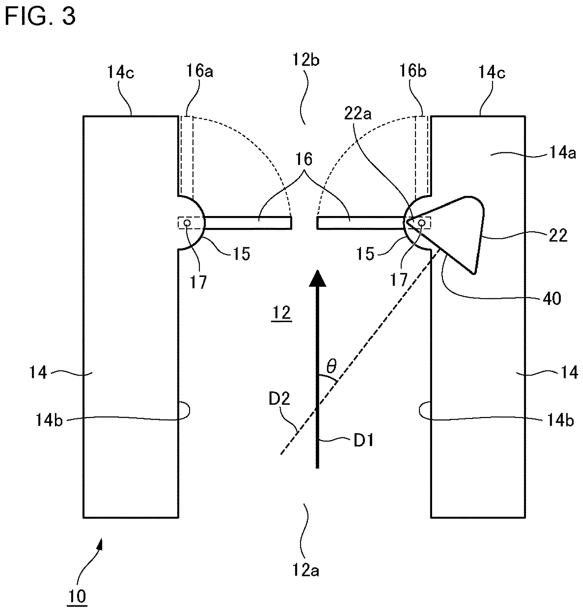

Fig. 3 is a plan view of the gate apparatus 100 as viewed from above. The housing 14 has a predetermined height and extends a predetermined distance along the passage 12 through which the person passes. Two housings 14 are arranged side by side along the passage 12 at an interval of a predetermined distance from each other on both sides of the passage 12. Preferably, the two housings 14 are installed in parallel. One gate apparatus 100 is composed of a pair of the two housings 14. A plurality of gate apparatuses 100 may be installed side by side in an entrance to and exit from a space in which entrance and exit management of people is required.

As described above, it is also assumed that the gate apparatus 100 of the present example embodiment is installed in a limited space of an existing facility, for example. Therefore, a length of the housing 14 in a direction of the passage 12 (the predetermined distance described above) can be made shorter than that of a typical face authentication gate of 2 to 3 meters. The length of the housing 14 in the direction of the passage 12 is, for example, 1.5 meters, a width of the passage 12 is, for example, 75 to 90 cm, and the distance to an opening/closing flap door 16 is, for example, 96 cm (equivalent to one and a half step length of an adult male).

The camera unit 20 is installed in an upper portion of the housing 14. The upper portion of the housing 14 is, for example, an upper surface 14a of the housing 14. However, the camera unit 20 may be above the housing 14, and need not necessarily be the upper surface 14a of the housing 14. The camera unit 20 may not be integrated with the housing 14, and may be another structure such as a cabinet that holds the camera unit 20 in an upper portion of the housing 14.

The camera unit 20 accommodating the image capturing unit 102 is provided on a side of the passage 12, and captures an image of a person who enters the passage 12 with the image capturing direction D2 of the image capturing unit 102 oblique with respect to the traveling direction D1 in which the person passes through the passage 12. As a result, the image capturing unit 102 can capture an image of a person passing through the passage 12 in the traveling direction D1 by capturing the image from an oblique front. Specifically, an angle θ at which the traveling direction D1 (a direction parallel to a side surface 14b of the housing 14 on a side of the passage 12) and the image capturing direction D2 (an optical axis of a camera 5) intersect is 30° or more and 60° or less. In addition, by setting the angle, it is possible to exclude a person other than a person (a person to be authenticated) passing through the passage 12 in the traveling direction D1, for example, a person who lines up behind the person to be authenticated in order to wait for the turn of passing through the gate, from showing in the captured image.

An entrance 12a side of the passage 12 is open. An opening and closing flap door 16 is provided on an exit 12b side of the passage 12 in such a way as to be openable and closable. In the example illustrated in this figure, two opening/closing flap doors 16 are provided, each of which is rotatably installed at one end on a side surface 14b of the housing 14 on the passage 12 side. In another example, one opening/closing flap door 16 may be rotatably installed on the side surface 14b of one of the housings 14 on the passage 12 side. In this example, the opening/closing flap door 16 is installed flush with one end surface 14c of the housing 14 on an exit 12b side or inside the one end surface 14c in such a way that one end surface 16b of the opening/closing flap door 16 does not protrude from the one end surface 14c of the housing 14 on the exit side when the opening/closing flap door 16 is opened. Note that a sliding door may be provided on the end surface 14c instead of the opening/closing flap door 16.

Apart of the side surface 14b of the housing 14 on the passage 12 side has a convex portion 15 protruding toward the passage 12 side. The camera unit 20 is installed in such a way that an end portion 22a of a housing 22 of the camera unit 20 on the passage 12 side is positioned on a convex portion 15 of the housing 14. In other words, the upper surface 14a of the housing 14 protrudes toward the passage 12 side at a portion that overlaps with the end portion 22a of the housing 22 of the camera unit 20. The protruding portion in the side surface 14b of the housing 14 on the passage 12 side may incorporate, for example, a rotation shaft 17 of the opening/closing flap door 16.

By installing the end portion 22a of the camera unit 20 in the convex portion 15, the angle formed by the image capturing direction D2 with respect to the traveling direction D1 becomes more acute. Accordingly, it is possible to photograph a person walking in the passage 12 from a direction closer to the front.

### <Hardware Configuration Example>

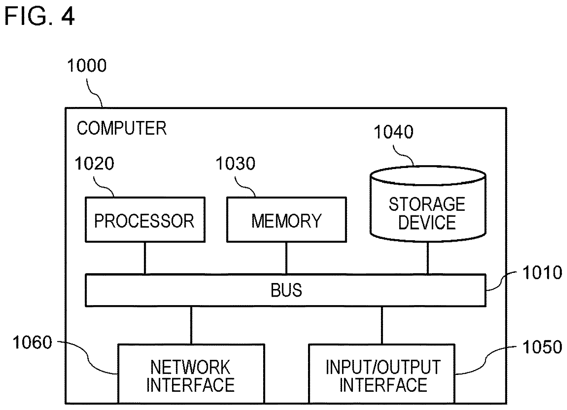

Fig. 4 is a block diagram illustrating a hardware configuration of a computer 1000 that achieves the gate apparatus 100 illustrated in Fig. 1. The computer 1000 includes a bus 1010, a processor 1020, a memory 1030, a storage device 1040, an input/output interface 1050, and a network interface 1060.

The bus 1010 is a data transmission path through which the processor 1020, the memory 1030, the storage device 1040, the input/output interface 1050, and the network interface 1060 mutually transmit and receive data. However, a method of connecting the processor 1020 and the like to each other is not limited to the bus connection.

The processor 1020 is a processor achieved by a central processing unit (CPU), a graphics processing unit (GPU), or the like.

The memory 1030 is a main storage apparatus achieved by a random access memory (RAM) or the like.

The storage device 1040 is an auxiliary storage apparatus achieved by a hard disk drive (HDD), a solid state drive (SSD), a memory card, a read only memory (ROM), or the like. The storage device 1040 stores program modules for achieving functions of the gate apparatus 100 (e.g., the image capturing unit 102, the transmission unit 104, and an image capturing control unit 112, an opening/closing control unit 114, a display control unit 126, and the like, which will be described later). The processor 1020 reads these program modules into the memory 1030 and executes them, thereby realizing the respective functions corresponding to the program modules. The storage apparatus 1040 also functions as various storage units.

The program module may be recorded on a storage medium. The storage medium on which the program modules are recorded includes a medium usable by the non-transitory tangible computer 1000, and a program code readable by the computer 1000 (the processor 1020) may be embedded in the medium.

The input/output interface 1050 is an interface for connecting the computer 1000 and various input-output equipment.

The network interface 1060 is an interface for connecting the computer 1000 to the communication network 3. The communication network 3 is, for example, a local area network (LAN) or a wide area network (WAN). A method of connecting the network interface 1060 to the communication network 3 may be a wireless connection or a wired connection. However, the network interface 1060 may not be used.

The computer 1000 is connected to necessary apparatuses (e.g., the face authentication apparatus 50, the camera 5, a display 7, and a speaker (not illustrated)) via the input/output interface 1050 or the network interface 1060.

### <Operation Example>

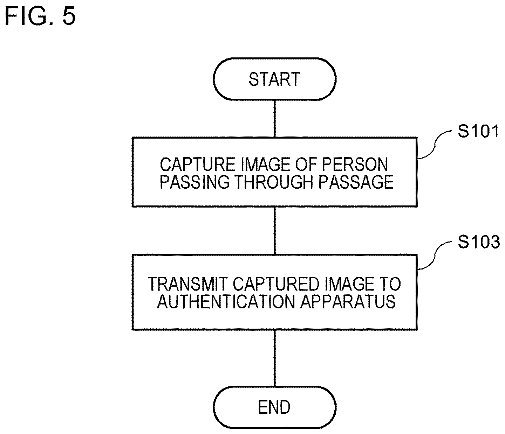

Fig. 5 is a flowchart illustrating an operation example of the gate apparatus 100 according to the present example embodiment. First, the image capturing unit 102 captures an image of a person passing through the passage 12 (step S101). As described above, the half mirror 40 of the camera unit 20 is provided in front of the image capturing unit 102 in the image capturing direction D2 of the image capturing unit 102, and the image capturing unit 102 captures an image of a person who enters the passage 12 with the image capturing direction D2 oblique with respect to the traveling direction D1 in which the person passes through the passage 12. Therefore, since a person entering the gate and passing through the passage 12 appears on the half mirror 40 and an image of the person can be seen from the person, the person naturally looks at his/her own figure appearing on the half mirror 40. In this state, the image capturing unit 102 can image a person passing through the passage 12. Then, the transmission unit 104 transmits the captured image of the person to the face authentication apparatus 50 (step S103).

Note that as for a timing of starting this flow, the flow is started, for example, in a timing of the image capturing by the image capturing unit 102, which will be explained in an example embodiment to be described later.

Although not illustrated in the present example embodiment, authentication processing is performed by the face authentication apparatus 50, the authentication result is returned to the gate apparatus 100, and the gate apparatus 100 performs opening/closing control of the opening/closing flap door 16, based on the authentication result. The opening and closing control of the opening/closing flap door 16 will be described in the second example embodiment.

As described above, in the present example embodiment, the half mirror 40 of the camera unit 20 is provided in front of the image capturing unit 102 in the image capturing direction D2 of the image capturing unit 102, and the image capturing unit 102 images a person who enters the passage 12 with the image capturing direction D2 oblique with respect to the traveling direction D1 in which the person passes through the passage 12. Therefore, since a person entering the gate and passing through the passage 12 appears on the half mirror 40 and an image of the person can be seen from the person, the person naturally looks at his/her own figure appearing on the half mirror 40. As a result, the possibility that the person to be authenticated directly faces the image capturing unit 102 can be increased. In this state, the image capturing unit 102 can image a person passing through the passage 12.

Therefore, according to the present example embodiment, in the image captured by the image capturing unit 102, the face of the person passing through the passage 12 can be captured from the front. This makes the quality of the image suitable for the authentication processing. Therefore, the authentication accuracy by the face authentication apparatus 50 is improved, and the authentication processing and the re-photographing can be reduced, and the time required for authentication can be shortened. Further, even when a length of the passage 12 of the housing 14 in the traveling direction D1 is short, the authentication processing can be completed with high accuracy. In other words, even when the installation location of the gate apparatus 100 is relatively narrow, it is possible to maintain the authentication accuracy of the person.

### (Second Example Embodiment)

A gate apparatus 100 according to the present example embodiment is the same as the above example embodiment except that opening and closing control of an opening/closing flap door 16 of the gate apparatus 100 is performed based on an authentication result of a face authentication apparatus 50.

### <Hardware Configuration Example>

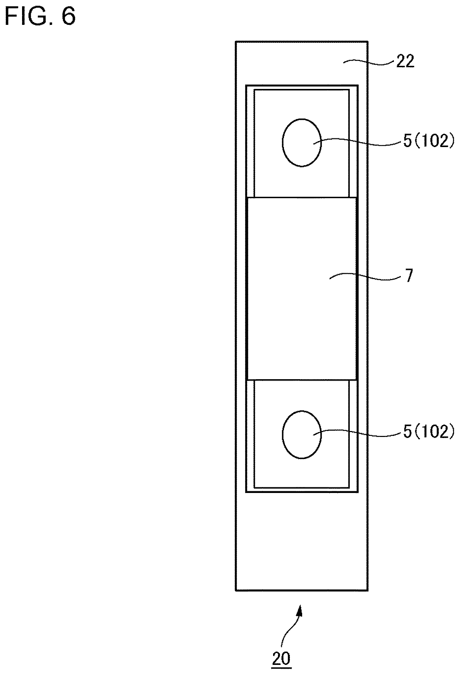

Fig. 6 is a front view of the inside of a camera unit 20 with a half mirror 40 removed. The camera unit 20 may have a display 7 at the center of a front surface of a housing 22. The display 7 is, for example, a liquid crystal display, an organic electro-luminescence (EL) display, or the like. The display 7 is preferably arranged at a level of a line of sight of a person passing through a passage 12. For example, a height where to install the display 7 may be determined from the average height of an adult. The camera unit 20 accommodates two cameras 5 provided above and below the display 7 as the image capturing unit 102. The display 7 will be described in an example embodiment to be described later.

The camera 5 includes a lens and an image sensor such as a charge coupled device (CCD) image sensor, and is a network camera such as an internet protocol (IP) camera. The network camera has, for example, a wireless local area network (LAN) communication function, and is connected to the face authentication apparatus 50 via a relay apparatus (not illustrated) such as a router of a communication network 3. The camera 5 may be provided with a mechanism for performing control of the direction of the camera body or the lens, zoom control, focusing, and the like by following in accordance with a movement of the person reflected on the half mirror 40.

It is preferable that the image generated by the camera 5 is photographed in real time and transmitted to the face authentication apparatus 50 by the transmission unit 104. However, the image transmitted to the face authentication apparatus 50 by the transmission unit 104 may not be directly transmitted from the camera 5, but may be an image delayed by a predetermined time. The image captured by the camera 5 may be temporarily stored in another storage apparatus, and the face authentication apparatus 50 may read out the image from the storage apparatus sequentially or at predetermined intervals. Further, the image transmitted to the face authentication apparatus 50 is preferably a moving image, but may be a frame image at predetermined intervals or may be a still image.

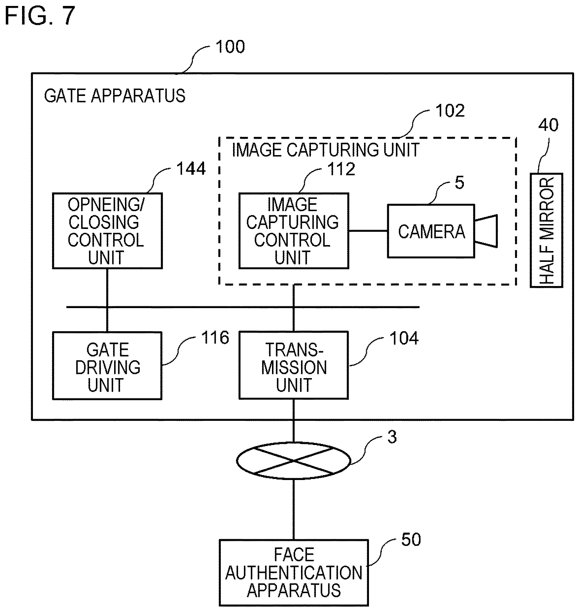

Fig. 7 is a functional block diagram illustrating a functional configuration example of the gate apparatus 100 according to the present example embodiment. The gate apparatus 100 includes an open/close control unit 114 and a gate driving unit 116 in addition to the image capturing unit 102 and the transmission unit 104 of the gate apparatus 100 according to the above-described example embodiment in Fig. 1.

The image capturing unit 102 includes two cameras 5 and an image capturing control unit 112. The image capturing control unit 112 causes the camera 5 to capture an image of a person, acquires the image of the person captured by the camera 5, and transfers the image to the transmission unit 104.

The opening/closing control unit 114 performs, for example, opening/closing control of the opening/closing flap door 16, based on the authentication result of the face authentication apparatus 50. However, the opening/closing condition of the opening/closing flap door 16 may be other than the authentication result of the face authentication apparatus 50. The opening/closing condition may be, for example, acceptance of an opening/closing operation by a person in an emergency or the like. The opening/closing control unit 114 may control the opening/closing flap door 16 to forcibly open or forcibly close in accordance with a human opening/closing operation.

The opening/closing flap door 16 includes a case of a normal position being in an open position and a case of a normal position being in a closed position. When the normal position is the open position, and when a face authentication of the person by the face authentication apparatus 50 is successful, the opening/closing control unit 114 does not perform the opening/closing control of the opening/closing flap door 16, and the opening/closing control unit 114 remains in the open position in such a way that the person can pass through the passage 12. When the face authentication fails, the opening/closing control unit 114 performs the opening/closing control in such a way that a person cannot pass through the passage 12, and the opening/closing flap door 16 is changed from the opening position to the closing position.

When the normal position is the closed position, and when the face authentication is successful, the opening/closing control unit 114 performs the opening/closing control in such a way that a person can pass through the passage 12, and the opening/closing flap door 16 is changed from the closed position to the open position. When the face authentication fails, the opening/closing control unit 114 does not control the opening/closing of the opening/closing flap door 16, and the opening/closing control unit 114 remains in the closed position in such a way that a person cannot pass through the passage 12.

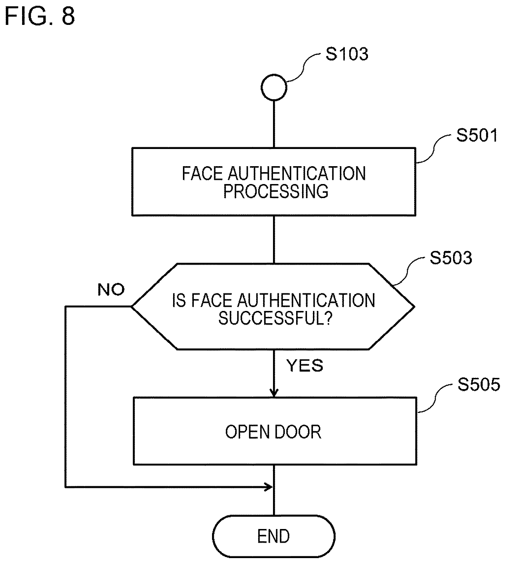

Fig. 8 is a flowchart illustrating an operation example of a gate system 1 according to the present example embodiment. Fig. 8 is started when the image transmitted from the gate apparatus 100 in step S103 of Fig. 5 of the above-described example embodiment is received.

When the face authentication apparatus 50 receives the image, the face authentication apparatus 50 performs an authentication processing (step S501). When the authentication result by the face authentication apparatus 50 is successful (YES in step S503), the opening/closing control unit 114 instructs the gate driving unit 116 to open the opening/closing flap door 16 (step S505). When the face authentication by the face authentication apparatus 50 fails (NO in step S503), a step S505 is bypassed, and the opening/closing flap door 16 remains closed. Note that the processing after the authentication processing fails in the step S503 can be variously considered, and is not limited to this. For example, a notification may be output to the nearest attendant, or only recording may be performed, and the opening/closing flap door 16 may be opened to allow the gate to pass therethrough.

According to the present example embodiment, the same effect as that of the above-described example embodiment can be achieved, and further, the opening and closing control of the opening/closing flap door 16 can be performed on the basis of the authentication result by the face authentication apparatus 50. As described above, since the opening and closing control of the opening/closing flap door 16 can be performed by using the authentication result with high authentication accuracy by the face authentication apparatus 50, a staying time of a person passing through a gate due to erroneous recognition can be reduced, congestion around the gate can be alleviated, and the security can be improved.

### (Third Example Embodiment)

### < Function Configuration Example>

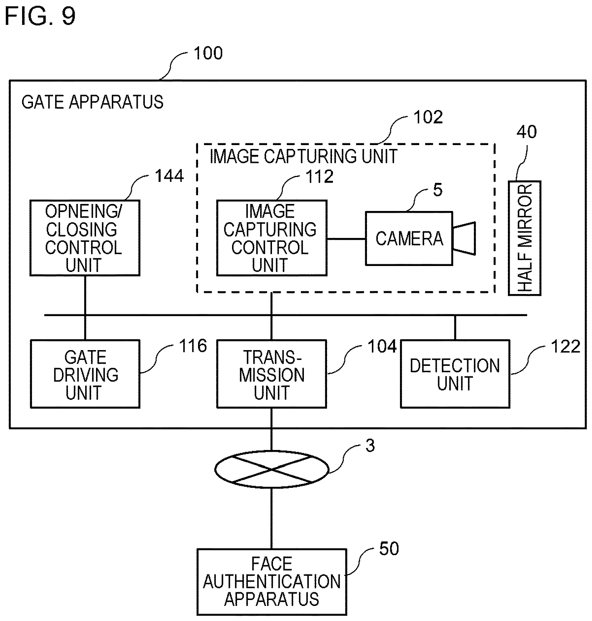

Fig. 9 is a functional block diagram illustrating a logical configuration example of a gate apparatus 100 according to the present example embodiment. The gate apparatus 100 according to the present example embodiment is the same as any one of the above-described example embodiments except that it has a configuration of detecting entry into a passage 12 of a person. In the example of Fig. 9, the gate apparatus 100 further includes a detection unit 122 in addition to the configuration of the gate apparatus 100 of Fig. 7. However, the detection unit 122 may be combined with the configuration of the gate apparatus 100 in Fig. 1.

The detection unit 122 is provided in the housing 14, and detects entry of a person into the passage 12. An image capturing unit 102 operates at a timing based on the detection result of the detection unit 122.

### <Hardware Configuration Example>

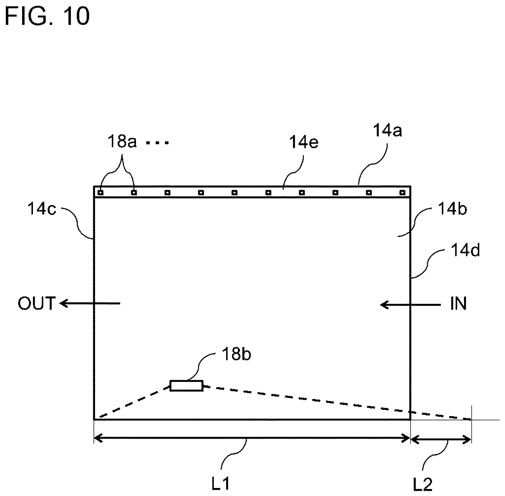

Fig. 10 is a side view of the gate apparatus 100 according to the present example embodiment as viewed from a side of the passage 12. The detection unit 122 includes at least one human sensor 18a and at least one entry sensor 18b. A plurality of human sensors 18a are provided in a region 14e on an upper portion of a side surface 14b of the housing 14 on the passage 12 side. In this example, ten human sensors 18a are arranged in the region 14e at substantially equal intervals.

The human sensor 18a is, for example, a light source reflection system such as infrared rays, a microwave system, or the like, and detects the presence of a person. A type, installation position, and the number of installation of the human sensor 18a are not limited to these. In this example, the human sensor 18a is a transmission type infrared sensor. Similarly, the human sensor is also installed in the region 14e on the upper portion of the surface 14b of another opposite housing 14 on the passage 12 side at a position opposite to the human sensor 18a of one housing 14. One human sensor 18a transmits infrared rays, and the other human sensor 18a receives infrared rays.

By using the plurality of human sensors 18a, the detection unit 122 can determine a position where a person exists in a traveling direction in the passage 12. The human sensor 18a can detect the entry of a person or the tailgating of a person into the passage 12. However, the human sensor 18a may be other than an infrared sensor. For example, it may be a sensor that detects movement of a person's load by means of a piezoelectric element installed on a floor surface of the passage 12 to be passed. In addition, a plurality of human sensors may be combined.

In addition, the entry sensor 18b of the detection unit 122 detects the entry of a person into the passage 12. As the entry sensor 18b, for example, an infrared sensor of a reflection type can be used. A detection range of the infrared sensor is a range indicated by a broken line in the figure, and is preferably set in such a way as to extend from a length L1 of the housing 14 in the traveling direction of the passage 12 to the near side of a front surface 14d of the housing 14 by a predetermined distance L2. In other words, it is possible to detect a person present at a position in front of the housing 14 by the distance L 2. For example, the predetermined distance L2 is 30 cm to 60 cm. A detection range of the entry sensor 18b may be appropriately set in accordance with an installation location of the gate apparatus 100. For example, in a case where there are many people who pass through the gate apparatus, when the detection range is widened, even a person who is lining up next is detected. Therefore, the distance L2 is set to be short.

The image capturing control unit 112 controls an image capturing timing of the image capturing unit 102, based on detection results of the entry sensor 18b and the plurality of human sensors 18a. Specifically, the image capturing timing by the image capturing unit 102 is exemplified below, but is not limited thereto.
(a1) The position of a person in the passage 12 is determined based on the detection results of the plurality of human sensors 18a, and the person is imaged when the person exists at a position suitable for the image capturing position by the image capturing unit 102.
(a2) When the entry sensor 18b detects the entry of a person into the detection range of the entry sensor 18b, the image capturing unit 102 starts image capturing, determines the position of the person in the passage 12, based on the detection results of the plurality of human sensors 18a, and selects an image frame when the person exists at a position suitable for the image capturing position by the image capturing unit 102 from the captured image.

However, even in the case of (a1), the image capturing unit 102 may always perform image capturing, and the image capturing unit 102 may determine the position of the person in the passage 12, based on the detection results of the plurality of human sensors 18a, and may select an image frame when the person exists at a position suitable for the image capturing position by the image capturing unit 102.

When the detection range of the entry sensor 18b is set in such a way as to extend from the housing 14 and it is possible to detect a person present at a position in front of the housing 14, image capturing can be started before the person enters the passage 12. This makes it possible to perform face authentication without actively stopping the person to be authenticated in front of the image capturing unit 102. In addition, for example, when a security check using face authentication is performed at a security inspection station of an airport, it is assumed that there is a limit to an equipment installation space of an existing airport. By extending the detection range of the entry sensor 18b to a region before passing the housing 14, a person before the entry of the gate apparatus 10 can be detected, and therefore it is possible to save a space in the gate apparatus 10 (i.e., to shorten LI).

Note that at the timing of starting the image capturing, for example, an icon of a camera or a photographed face image of a person to be authenticated can be displayed on the display 7. As a result, the person to be authenticated can recognize that he/she is being photographed.

### <Operation Example>

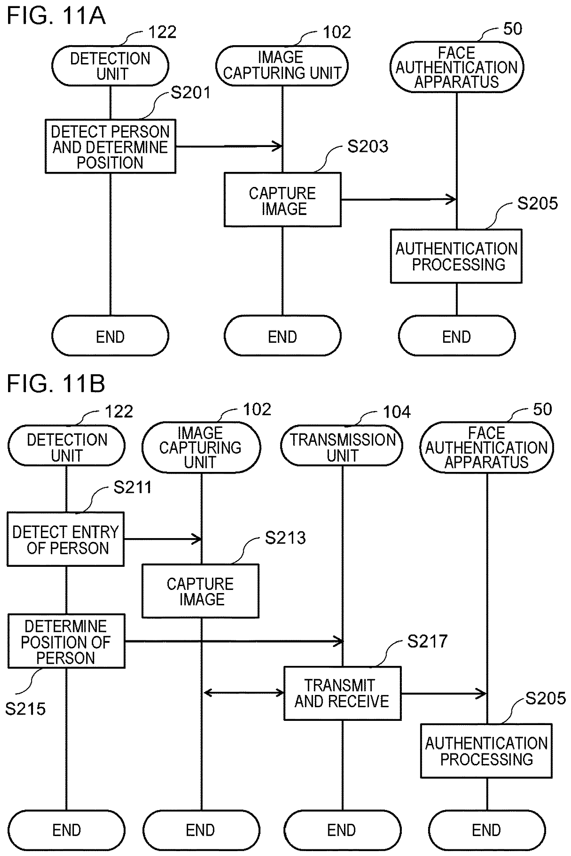

Fig. 11 is a flowchart illustrating an operation example of a gate system 1 according to the present example embodiment. Fig. 11(a) illustrates an operation example by the image capturing timing of (a1) described above and Fig. 11(b) illustrates an operation example by the image capturing timing of (a 2) described above.

First, by using Fig. 11(a), a description will be given of an operation example according to the image capturing timing of (a1) described above. The detection unit 122 determines the position of the person in the passage 12, based on the detection results of the plurality of human sensors 18a and detects that the person exists at a position suitable for the image capturing position by the image capturing unit 102 (step S201). The image capturing unit 102 captures an image of a person when the detection unit 122 detects the person (step S203). The transmission unit 104 transmits the captured image to the face authentication apparatus 50 (not illustrated), and the face authentication apparatus 50 performs authentication processing, based on the received captured image (step S205).

Next, by using Fig. 11(b), a description will be given of an operation example according to the image capturing timing of (a2) described above. The detection unit 122 detects the entry of a person into the gate apparatus, based on the detection result of the entry sensor 18b. The image capturing unit 102 starts photographing when the detection unit 122 detects a person (step S213).

Then, when the person travels through the passage 12, the detection unit 122 determines the position of the person in the passage 12, based on the detection results of the plurality of human sensors 18a and detects that the person exists at a position suitable for the image capturing position by the image capturing unit 102 (step S215). When the detection unit 122 detects that the person exists at the image capturing position, the transmission unit 104 selects a frame at a timing at which the presence of the person in the image capturing position is detected from the image (frame) captured by the image capturing unit 102, and transmits the frame to the face authentication apparatus 50 (step S217). The face authentication apparatus 50 performs authentication processing, based on the received captured image.

As described above, according to the present example embodiment, the same effect as that of the first example embodiment is achieved, and the image capturing timing of the image capturing unit 102 is controlled according to the result of detecting the entry of a person into the gate, and therefore, it is possible to capture an image of a person present at a position where a captured image suitable for the authentication processing can be acquired. Thus, an image with high authentication accuracy can be captured, and the authentication accuracy by the face authentication apparatus 50 can be improved. Therefore, it is possible to reduce the staying time of a person who passes through the gate due to erroneous recognition, alleviate congestion around the gate, and improve security.

### (Fourth Example Embodiment)

### <Function Configuration Example>

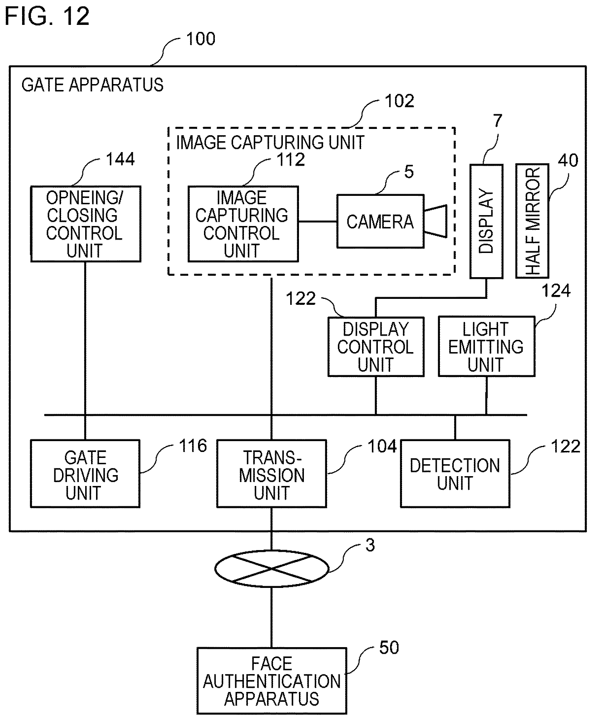

Fig. 12 is a functional block diagram illustrating a logical configuration example of a gate apparatus 100 according to the present example embodiment. The gate apparatus 100 according to the present example embodiment is the same as that of the third example embodiment except that it has a light-emitting unit that emits light at a timing based on the detection result of the detection unit 122 of the third example embodiment. However, the gate apparatus 100 according to the present example embodiment may be combined with the configuration of the first example embodiment in which the detection unit 122 is added.

The gate apparatus 100 further includes a light emitting unit 124 that is positioned at least partially around the half mirror 40 and emits light at a timing based on a detection result of a detection unit 122.

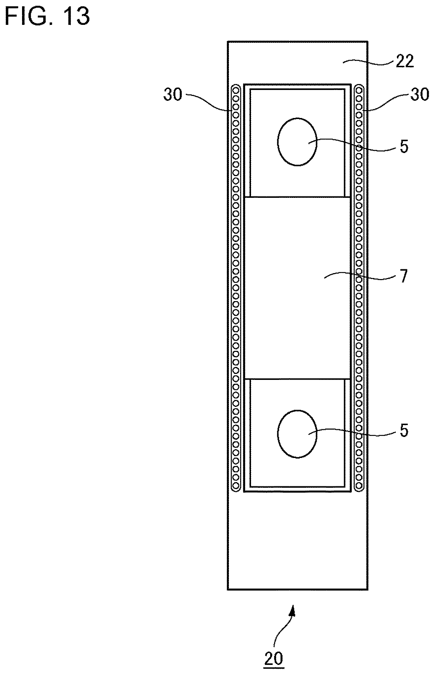

Fig. 13 is a front view of the inside of a camera unit 20 with a half mirror 40 removed. In addition to the camera unit 20 of Fig. 6, a plurality of light emitting diodes (LEDs) 30 are arranged at corresponding positions around the half mirror 40.

The light emitting unit 124 controls lighting, turning off, or flashing of the LED 30. Alternatively, in a case of a configuration in which the LEDs emit light of different colors, the color to be emitted may be controlled. In the example of Fig. 13, a plurality of LEDs are disposed side by side on both side edges of the half mirror 40. It is preferable that the light emitting unit 124 emits light at least toward the passage 12 side.

The light emission of the LED 30 disposed around the half mirror 40 makes it possible to first direct a line of sight of a person to be authenticated to the half mirror 40 (i.e., the image capturing unit 102). Secondly, the light emission of the LED 30 can efficiently illuminate a region which is an image capturing target such as the face of a person existing in the passage 12, thereby improving the quality of the captured image. Even when the face of the person is backlit depending on an installation location of the gate apparatus 100, the quality of the captured image can be improved because the face of the person can be irradiated with light. In other words, the authentication accuracy using the image can be improved.

The light emitting unit 124 can control lighting of the LED 30 for each of the above purposes. For example, when the purpose is to direct the line of sight of the person to be authenticated to the half mirror 40, the light emitting unit 124 controls the LED 30 to flash or move lighting positions of the plurality of LEDs when the entry sensor 18b of the detection unit 122 detects the entry of the person. As a result, there is a high possibility that a person who has entered the gate turns his/her line of sight to the half mirror 40, and there is a high possibility that an image suitable for the authentication processing can be acquired.

Further, for the purpose of applying light to the region which is an image capturing target, the light emitting unit 124 may determine a position where the person exists in the traveling direction in the passage 12, based on the detection result of the human sensor 18a of the detection unit 122, and may cause the LED 30 to emit light when the person exists at a position suitable for the image capturing position by the image capturing unit 102, i.e., in accordance with the above-described photographing timing. As a result, even when the light does not hit the face of the person in the gate, the light can be irradiated to the face of the person, and therefore, the quality of the captured image can be improved. Note that in the image captured by the image capturing unit 102, the LED 30 can be caused to emit light when the size of the face of the person to be authenticated or the distance between eyes satisfies a predetermined criterion, in addition to the timing described above.

The gate apparatus 100 according to the present example embodiment further includes a display control unit 126. As described above, the display 7 is provided in back of the half mirror 40. The display control unit 126 controls screen display on the display 7.

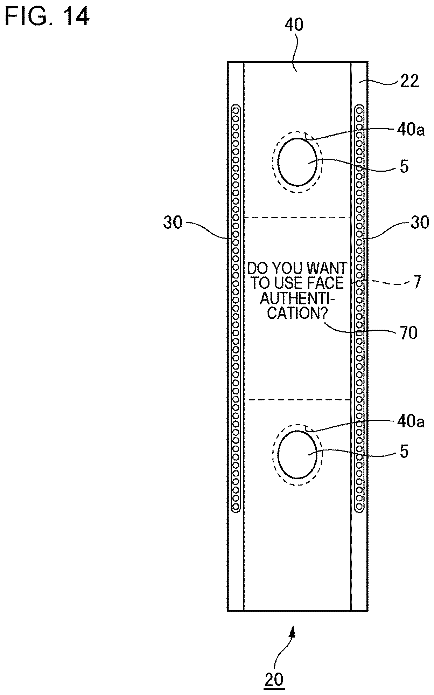

Fig. 14 is a front view of the camera unit 20 to which the half mirror 40 is attached.

The half mirror 40 is provided on one surface of the camera unit 20. The half mirror 40 is installed with a mirror surface turned to an outside of the camera unit 20. A mirror film is not formed in a region inside a broken line 40a equivalent to the front surface of the lens of a camera 5 provided inside the camera unit 20.

Specifically, the transmittance of the half mirror 40 is 100% in the region inside the broken line 40a, and 30 to 10% in other regions, and more preferably 20%. As a result, since the image of the person existing in front of the camera unit 20 is reflected on the half mirror 40, the person existing in front of the camera unit 20 can see his/her image reflected on the half mirror 40. Further, an image displayed on the display 7 installed in back of the half mirror 40 also passes through the half mirror 40, and the person existing in front of the camera unit 20 can see the image.

The display control unit 126 causes the display 7 to display a message 70, for example, "Do you want to display face authentication?" for guiding the line of sight of the person passing through the gate to be directed to the half mirror 40 (camera 5).

According to the present example embodiment, in the case of having the same configuration as that of at least one of the above-described example embodiments, the same effect as that of the associated example embodiments can be acquired, and further, the image capturing timing of the image unit 102 and the light emitting timing of the light emitting unit 124 are controlled based on the detection result of the detection unit 122 for detecting the entry of a person into the passage 12, and therefore, the quality of the captured image used in the authentication processing can be improved.

In addition, since the display 7 can be displayed to direct the line of sight of the person passing through to the half mirror 40 (image capturing unit 102), an image of the face of the person can be captured from the front. As described above, an image with high authentication accuracy can be captured, and the authentication accuracy by the face authentication apparatus 50 can be improved. Therefore, it is possible to reduce the staying time of a person who passes through in the gate due to erroneous recognition, alleviate congestion around the gate, and improve security.

Although the example embodiments of the present invention have been described above with reference to the drawings, these are examples of the present invention, and various configurations other than the above may be adopted.

For example, although the above-described example embodiments have described the gate apparatus in which the housing 14 is provided on both sides of the passage 12, the gate apparatus 10 in which the housing 14 is provided on one side of the passage 12 can also be used.

Although the present invention has been described above with reference to example embodiments and examples, the present invention is not limited to the above-described example embodiments and examples. Various modifications can be made to the structure and details of the present invention which can be understood by a person skilled in the art within the scope of the present invention.

Note that in the present invention, when information on a user is acquired and used, this is to be performed legally.

Some or all of the above example embodiments may also be described as the following

Supplementary notes, but are not limited to the following.
1. A gate apparatus including:
   an image capturing unit that is provided on a side of a passage, and captures an image of a person entering the passage with an image capturing direction oblique with respect to a traveling direction in which a person passes through the passage;
   a half mirror that is provided in front of the image capturing unit in the image capturing direction of the image capturing unit; and
   a transmission unit that transmits the image captured by the image capturing unit to an authentication apparatus.
2. The gate apparatus according to 1, further including:
   a housing provided on the side of the passage; and
   a detection unit that is provided on the housing, and detects an entry of a person into the passage, wherein
   the image capturing unit operates at a timing based on a detection result of the detection unit.
3. The gate apparatus according to 2, further including
   a light emitting unit that is positioned on at least a part of a periphery of the half mirror, and emits light at the timing based on the detection result of the detection unit.
4. The gate apparatus according to 2 or 3, wherein the image capturing unit is installed on an upper portion of the housing.
5. The gate apparatus according to 4, further including a second housing that accommodates the image capturing unit and has the half mirror on one surface.
6. The gate apparatus according to 5, wherein
   the housing has a side surface on the passage, a part of the side surface of the housing protruding toward the passage side, and
   an end portion on a passage side in the second housing is positioned at the protruding portion on the housing.
7. The gate apparatus according to 6, wherein
   the protruding portion of the housing incorporates a rotation shaft of a flapper.
8. The gate apparatus according to 6 or 7, further including a display unit that is provided in back of the half mirror.
9. The gate apparatus according to 8, wherein a transmittance of the half mirror is 20% or more.
10. The gate apparatus according to any one of 1 to 9, wherein a film of the half mirror is not formed in front of a lens of the image capturing unit.
11. A control method of a gate apparatus including: an image capturing unit that is provided on a side of a passage, and captures an image of a person entering the passage with an image capturing direction oblique with respect to a traveling direction in which a person passes through the passage; and
   a half mirror that is provided in front of the image capturing unit in the image capturing direction of the image capturing unit, the control method including,
   by the gate apparatus:
      causing the image capturing unit to capture an image of a person passing through the passage; and
      transmitting the image captured by the image capturing unit to an authentication apparatus.
12. The control method according to 11, further comprising: by the gate apparatus further including a housing provided on a side of the passage,
   detecting an entry of a person into the passage by using a detection unit provided on the housing; and
   causing the image capturing unit to operate at a timing based on a detection result of an entry of the person.
13. The control method according to 12, further comprising: by the gate apparatus, causing a light emitting unit positioned on at least a part of a periphery of the half mirror to emit light at the timing based on the detection result.
14. The control method according to 12 or 13, wherein
   the image capturing unit is installed on an upper portion of the housing.
15. The control method according to 14, wherein
   the gate apparatus further includes a second housing accommodating the image capturing unit and having the half mirror on one surface.
16. The control method according to 15, wherein
   the housing has a side surface on the passage, a part of the side surface of the housing protruding toward the passage side, and
   an end portion on a passage side in the second housing is positioned at the protruding portion on the housing.
17. The control method according to 16, wherein the protruding portion of the housing incorporates a rotation shaft of a flapper.
18. The control method according to 16 or 17, wherein the gate apparatus further includes a display unit provided in back of the half mirror.
19. The control method according to 18, wherein a transmittance of the half mirror is 20% or more.
20. The control method according to any one of 11 to 19, wherein a film of the half mirror is not formed in front of a lens of the image capturing unit.
21. A program for causing a computer that implements a gate apparatus including: an image capturing unit that is provided on a side of a passage, and captures an image of a person entering the passage with an image capturing direction oblique with respect to a traveling direction in which a person passes through the passage; and
   a half mirror provided in front of the image capturing unit in the image capturing direction of the image capturing unit, to execute:
   a procedure of causing the image capturing unit to capture an image of a person passing through the passage; and
   a procedure of transmitting the image captured by the image capturing unit to an authentication apparatus.
22. The program according to 21, wherein the gate apparatus further includes:
   a housing provided on the side of the passage; and
   a detection unit that is provided on the housing, and detects an entry of a person into the passage, the program causing a computer to execute:
      a procedure of detecting an entry of a person into the passage by using the detection unit; and
      a procedure of causing the image capturing unit to operate at a timing based on a detection result of the detection unit.
23. The program according to 22, wherein
   the gate apparatus further includes a light emitting unit positioned on at least a part of a periphery of the half mirror, the program causing a computer to execute
   a procedure of causing the light emitting unit to emit light at the timing based on the detection result of the detection unit.
24. The program according to 22 or 23, wherein
   the image capturing unit is installed on an upper portion of the housing.
25. The program according to 24, wherein
   the gate apparatus further includes a second housing accommodating the image capturing unit and having the half mirror on one surface.
26. The program according to 25, wherein
   the housing has a side surface on the passage, a part of the side surface of the housing protruding toward the passage side, and
   an end portion on a passage side in the second housing is positioned at the protruding portion on the housing.
27. The program according to the 26, wherein
   the protruding portion of the housing incorporates a rotation shaft of a flapper.
28. The program according to 26 or 27, wherein
   the gate apparatus further includes a display unit provided in back of the half mirror.
29. The program according to 28, wherein
   a transmittance of the half mirror is 20% or more.
30. The program according to any one of 21 to 29, wherein
   a film of the half mirror is not formed in front of a lens of the image capturing unit.

## Claims

1. Agate apparatus comprising:
an image capturing unit that is provided on a side of a passage, and captures an image of a person entering the passage with an image capturing direction oblique with respect to a traveling direction in which a person passes through the passage;
a half mirror that is provided in front of the image capturing unit in the image capturing direction of the image capturing unit; and
a transmitting unit that transmits the image captured by the image capturing unit to an authentication apparatus.

2. The gate apparatus according to claim 1, further comprising:
a housing provided on the side of the passage; and
a detection unit that is provided on the housing, and detects an entry of a person into the passage, wherein
the image capturing unit operates at a timing based on a detection result of the detection unit.

3. The gate apparatus according to claim 2, further comprising
a light emitting unit that is positioned on at least a part of a periphery of the half mirror, and emits light at the timing based on the detection result of the detection unit.

4. The gate apparatus according to claim 2 or 3, wherein
the image capturing unit is installed on an upper portion of the housing.

5. The gate apparatus according to claim 4, further comprising
a second housing that accommodates the image capturing unit and has the half mirror on one surface.

6. The gate apparatus according to claim 5, wherein
the housing has a side surface on the passage, a part of the side surface of the housing protruding toward the passage side, and
an end portion on a passage side in the second housing is positioned at the protruding portion on the housing.

7. The gate apparatus according to claim 6, wherein
the protruding portion of the housing incorporates a rotation shaft of a flapper.

8. The gate apparatus according to claim 6 or 7, further comprising
a display unit that is provided in back of the half mirror.

9. The gate apparatus according to claim 8, wherein
a transmittance of the half mirror is 20% or more.

10. The gate apparatus according to any one of claims 1 to 9, wherein
a film of the half mirror is not formed in front of a lens of the image capturing unit.

11. A control method of a gate apparatus including:
an image capturing unit that is provided on a side of a passage, captures an image of a person entering the passage with an image capturing direction oblique with respect to a traveling direction in which a person passes through the passage; and
a half mirror that is provided in front of the image capturing unit in the image capturing direction of the image capturing unit, the control method comprising: by the gate apparatus,
causing the image capturing unit to capture an image of a person passing through the passage; and
transmitting the image captured by the image capturing unit to an authentication apparatus.

12. The control method according to claim 11, further comprising: by the gate apparatus further including a housing provided on a side of the passage,
detecting an entry of a person into the passage by using a detection unit provided on the housing; and
causing the image capturing unit to operate at a timing based on a detection result of an entry of the person.

13. The control method according to claim 12, further comprising, by the gate apparatus, causing a light emitting unit positioned on at least a part of a periphery of the half mirror to emit light at the timing based on the detection result.

14. The control method according to claim 12 or 13, wherein
the image capturing unit is installed on an upper portion of the housing.

15. The control method according to claim 14, wherein
the gate apparatus further includes a second housing accommodating the image capturing unit and having the half mirror on one surface.

16. The control method according to claim 15, wherein
the housing has a side surface on the passage, a part of the side surface of the housing protruding toward the passage side, and
an end portion on a passage side in the second housing is positioned at the protruding portion on the housing.

17. The control method according to claim 16, wherein
the protruding portion of the housing incorporates a rotation shaft of a flapper.

18. The control method according to claim 16 or 17, wherein
the gate apparatus further includes a display unit provided in back of the half mirror.

19. The control method according to claim 18, wherein
a transmittance of the half mirror is 20% or more.

20. The control method according to any one of claims 11 to 19, wherein
a film of the half mirror is not formed in front of a lens of the image capturing unit.

21. A program for causing a computer that implements a gate apparatus including:
an image capturing unit that is provided on a side of a passage, and captures an image of a person entering the passage with an image capturing direction oblique with respect to a traveling direction in which a person passes through the passage; and
a half mirror provided in front of the image capturing unit in the image capturing direction of the image capturing unit, to execute:
a procedure of causing the image capturing unit to capture an image of a person passing through the passage; and
a procedure of transmitting the image captured by the image capturing unit to an authentication apparatus.

22. The program according to claim 21, wherein the gate apparatus further includes:
a housing provided on the side of the passage; and
a detection unit that is provided on the housing, and detects an entry of a person into the passage, the program causing a computer to execute:
a procedure of detecting an entry of a person into the passage by using the detection unit; and
a procedure of causing the image capturing unit to operate at a timing based on a detection result of the detection unit.

23. The program according to claim 22, wherein
the gate apparatus further includes a light emitting unit positioned on at least a part of a periphery of the half mirror, the program causing a computer to execute
a procedure of causing the light emitting unit to emit light at the timing based on the detection result of the detection unit.

24. The program according to claim 22 or 23, wherein
the image capturing unit is installed on an upper portion of the housing.

25. The program according to claim 24, wherein
the gate apparatus further includes a second housing accommodating the image capturing unit and having the half mirror on one surface.

26. The program according to claim 25, wherein
the housing has a side surface on the passage, a part of the side surface of the housing on a side of the passage protruding toward the passage side, and
an end portion on a passage side in the second housing is positioned at the protruding portion on the housing.

27. The program according to claim 26, wherein
the protruding portion of the housing incorporates a rotation shaft of a flapper.

28. The program according to claim 26 or 27, wherein
the gate apparatus further includes a display unit provided in back of the half mirror.

29. The program according to claim 28, wherein
a transmittance of the half mirror is 20% or more.

30. The program according to any one of claims 21 to 29, wherein
a film of the half mirror is not formed in front of a lens of the image capturing unit.
